# EUROPÄISCHE PATENTANMELDUNG

(11) **EP 0 989 057 A2**
(43) Veröffentlichungstag der Anmeldung: **29.03.2000**
(21) Anmeldenummer: 99117380.8
(22) Anmeldetag: 03.09.1999
(51) Int. Cl.: B64C 3/48

(54) **Einrichtung bei einem Tragflügel eines Luftfahrzeuges zur Veränderung der Flügelform**

(30) Priorität: 24.09.1998 DE 29817162 U
(71) Anmelder: Homann, Werner, D-82449 Uffing (DE)
(72) Erfinder: Homann, Werner, D-82449 Uffing (DE)
(74) Vertreter: Gauger, Hans-Peter, Dipl.-Ing.

(57) **Zusammenfassung**

Bei einem Tragflügel eines Luftfahrzeuges ist eine Einrichtung zur Veränderung der Flügelform vorgesehen, die mit wenigstens einem biegeelastischen Spannträger (1) und mit wenigstens einem Seilzug-Stellantrieb (9) gebildet ist, der eine bogenförmige Krümmung des für eine Vorspannung an der Flügelnase (4) und an dem Flügelende verankerten Spannträgers (1) verändern lässt für eine durch den Spannträger (1) vermittelte adaptive Veränderung wenigstens eines Teilbereichs der Flügelform.

## Beschreibung

Die Erfindung bezieht sich auf eine Einrichtung bei einem Tragflügel (Schalenflügel) eines Luftfahrzeuges zur Veränderung der Flügelform respektive das Blattprofils bzw. der intern versteiften Beplankung des Tragflügels.

Es kann als bekannt vorausgesetzt werden, daß ein allgemein angestrebtes Entwurfsziel bei Luftfahrzeugen eine Niedrighaltung der Betriebskosten ist unter Berücksichtigung vorrangig einer anzustrebenden Fluggeschwindigkeit und Flugstrecke, welche für den Flugbetrieb im Vergleich mit anderen Verkehrsmitteln insbesondere zeitliche Vorsprünge erwarten lassen sollen. Bei den Verkehrsflugzeugen wird daher zunehmend auch nach Lösungen gesucht, welche in Abhängigkeit von solchen Überlegungen den Treibstoffverbrauch verringern lassen. Ein Ansatzpunkt dafür wurde in der Schaffung eines variablen Flugzeugflügels gesucht, der seine Form den aktuellen Flugzuständen anzupassen hätte. Bei solchen Überlegungen wird berücksichtigt, daß bei Flugbeginn mit vollem Tank und bei Flugende mit weitgehend leerem Tank andere Auftriebsbedingungen vorherrschen als während des Streckenfluges, wenn sich der Tank zunehmend leert. Befriedigende Lösungen oder wenigstens Erfolg versprechende Ansatzpunkte für solche adaptive Tragflügel sind jedoch bis heute unbekannt oder wurden bisher unter wirtschaftlichen und insbesondere sicherheitstechnischen Gesichtspunkten nicht realisiert.

Die Erfindung hat sich daher mit der Aufgabe befasst, eine mit möglichst einfachen Mitteln zu realisierende Einrichtung vorrangig bei einem Tragflügel für Luftfahrzeuge bereitzustellen, mit welcher die Flügelform adaptiv verändert werden kann.

Diese Aufgabe wird erfindungsgemäß mit einer Einrichtung der eingangs genannten Art in der Ausbildung gemäß dem Patentanspruch 1 gelöst.

Bei der erfindungsgemäßen Einrichtung ergibt der zum Einbau in die Schale eines Tragflügels vorgesehene biegeelastische Spannträger eine in weiten Grenzen variable Veränderungsmöglichkeit der Flügelform, sodaß damit eine Anpassung an sich verändernde Auftriebsbedingungen während des Streckenfluges eines Luftfahrzeuges möglich ist. Das Funktionsprinzip eines solchen hinsichtlich seiner Durchbiegung variablen Spannträgers ist dabei im weitesten Sinne vergleichbar mit demjenigen einer Angelrute, die sich bogenförmig durchbiegen lässt, wobei die Größe der Bogenkrümmung abhängig ist von der Größe der Belastung der Angelschnur. Eine gleichartig lastabhängige Veränderung der Bogenkrümmung wird ebenso für den biegeelastischen Spannträger der erfindungsgemäßen Einrichtung mit dem integrierten Seilzug-Stellantrieb erhalten, wobei die dafür bevorzugten Ausführungsformen die Ausbildungen erhalten können, die für die erfindungsgemäße Einrichtung in den Patentansprüchen 2 bis 4 angegeben sind. Die bei diesen besonderen Stellantrieben zu realisierende Umwandlung der Energie eines Arbeitsfluids, welches im übrigen bei Luftfahrzeugen auch für andere Stellantriebe eingesetzt wird, in eine mechanische Zugkraft zur Bereitstellung einer entsprechenden mechanischen Stellkraft lässt dabei die Veränderung der Flügelform äußerst feinfühlig justieren, so daß auch unter Einbeziehung von weiteren Vorkehrungen, die für die erfindungsgemäße Einrichtung in weiteren Patentansprüchen angegeben sind, ein optimaler Wirkungsgrad für die angestrebte adaptive Veränderungsmöglichkeit der Flügelform erhalten wird.

Ein Ausführungsbeispiel der erfindungsgemäßen Einrichtung ist in der Zeichnung schematisch dargestellt und wird nachfolgend näher erläutert. Es zeigt
- Fig. 1: eine Schemadarstellung eines Tragflügels für ein Luftfahrzeug, bei welchem die erfindungsgemäße Einrichtung integriert ist,
- Fig. 2: eine Schemadarstellung eines Tragflügels gemäß einer alternativen Ausführungsform mit einer Ausschäumung der Flügelschale,
- Fig. 3: eine Schemadarstellung eines Tragflügels gemäß einer Ausführungsform, bei welcher ein zusätzlicher Seilzug-Stellantrieb vorgesehen ist, und
- Fig. 4: eine Schemadarstellung eines Tragflügels, bei welchem der Seilzug-Stellantrieb der erfindungsgemäßen Einrichtung unterschiedlich ausgebildet ist.

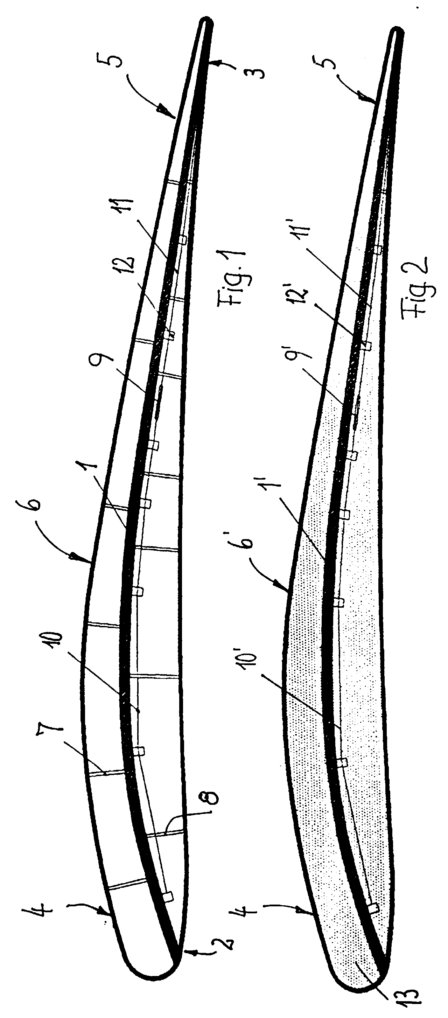

Bei der in Fig. 1 gezeigten Ausführungsform einer erfindungsgemäßen Einrichtung zur Veränderung der Flügelform respektive des Blattprofils bzw. der Beplankung des Tragflügels eines Luftfahrzeuges ist ein biegeelastischer Spannträger 1 mit den beiden Trägerenden 2 und 3 derart an der Flügelnase 4 und an dem Flügelende 5 des Trägerprofils 6 verankert, daß sich für diesen Spannträger ein bogenförmig gekrümmter, vorgespannter Trägerverlauf ergibt. Die Größenordnung der Bogenkrümmung ist dabei abhängig von dem gegenseitigen Abstand der beiden flügelfesten Verankerungen des Spannträgers sowie auch von dessen Ausgangslänge, bevor der Spannträger unter Vermittlung der beiden Verankerungen an den Trägerenden in die bogenförmig gekrümmte Anordnung innerhalb des Tragflügels gebracht wird. Eine optimale Bogenkrümmung des Spannträgers lässt sich dabei unter Berücksichtigung der aerodynamischen Bedingungen ohne weiteres ermitteln, welchen das Profil des Tragflügels unterworfen ist, wobei in diese Ermittlung auch eine Anordnung von einzelnen biegeelastischen Stegen oder Holmen 7 und 8 einbezogen werden kann, durch welche der Spannträger eine Abstützung an der Beplankung des Tragflügels erfährt.

Die gemeinsam mit dem Profil des Tragflügels vorbestimmte Bogenkrümmung des Spannträgers 1 ist durch einen Seilzug-Stellantrieb 9 veränderbar. Dieser Seilzug-Stellantrieb sollte bevorzugt eine Ausbildung gemäß der EP 0 838 597 A1 erhalten, weil damit die Energie eines in Luftfahrzeugen in aller Regel zur Verfügung stehenden Arbeitsfluids in eine mechanische Kraft umgewandelt werden kann, nämlich im vorliegenden Fall in eine axiale Zugkraft, mit welcher das Einholen von zwei Zugseilen 10 und 11 ermöglicht wird, mit denen also eine Veränderung der Bogenkrümmung des Spannträgers 1 zu erhalten ist.

Für diese Veränderung der Bogenkrümmung des Spannträgers 1 sind die beiden Zugseile 10 und 11 mit einem ersten Ende an den beiden flügelfesten Verankerungen des Spannträgers 1 befestigt. Die Befestigung ist dabei an einer Stelle vorgenommen, für welche beim Einholen der Zugseile durch die Zugkräfte, die an den Besfestigungsenden der Zugseile einander axial entgegenwirken, eine leichtgängige und kräftesparende Veränderung der Bogenkrümmung des Spannträgers erhalten wird. Die Zugkräfte werden dabei über die zweiten Befestigungsende der Zugseile 10 und 11 an zwei Zugankern erhalten, die an den beiden axialen Enden einer im wesentlichen rohrförmigen Expansionskamner des Seilzug-Stellantriebes 9 angeordnet sind. Die Expansionskammer besteht aus einem elastisch-nachgiebigen Material und kann somit bei einer Beaufschlagung mit einem durch ein Arbeitsfluid vermittelten Innendruck eine im wesentlichen radial ausgerichtete Verformung erfahren, die auf eine die Expansionskammer umgebende Kraftübertragungshülle übertragen wird, welche aus einem flexiblen, jedoch nicht streckbaren und mit einem Endlosfaden gebildeten Fadenmaterial besteht. Die Zuganker sind an der Kraftübertragungshülle befestigt, sodaß sich eine Erhöhung des Innendruckes in der Expansionskammer in der Erzeugung von axial entgegenwirkenden Zugkräften auswirkt, die über die Zuganker an die beiden Zugseile 10 und 11 weitergegeben werden. Die Zugseile, die noch durch einzelne Seilführungen 12 entlang des Spannträgers 1 geführt werden, bewirken daher eine gegenseitige Annäherung der beiden Enden des Spannträgers und führen so zu einer Veränderung seiner Bogenkrümmung. Diese Veränderung der Bogenkrümmung des Spannträgers wirkt sich als Folge der Verankerung seiner beiden Enden unmittelbar auf die Beplankung des Tragflügels aus, sodaß das Trägerprofil 6 eine eng angepasste Veränderung erfährt. Das Ausmaß dieser Veränderung ist dabei offensichtlich mit einer angepassten Steuerung des Seilzug-Stellantriebes festlegbar, wobei die Steuerung bspw. mit einem Regelkreis erhalten werden kann, der in Abhängigkeit von bestimmten Parametern arbeitet, welche für einen momentanen Flugzustand respektive für die Auftriebsbedingungen maßgebend sind, denen das Luftfahrzeug während eines fortgesetzten Streckenfluges unterworfen ist. Hinsichtlich der Anordnung der einzelnen Seilführungen 12 ist dabei gleichzeitig die Überlegung einbezogen, daß die Grundform des Tragflügels eines Luftfahrzeuges im Bereich der Flügelnase weitgehend starr ist und erst ab etwa einem Drittel des Profilquerschnittes zum Flügelende hin ein biegsames Verhalten aufweist. Diese wechselnde Steifigkeit lässt sich daher mit Unterstützung einer entsprechend angepassten Verteilung sowie auch einer entsprechend unterschiedlichen Ausbildung solcher Seilführungen dafür nutzen, die Flügelform an vorbestimmten Stellen adaptiv mehr zu verändern als an anderen, das Flugverhalten unmittelbar beeinflussenden Stellen. Wenn daher für die beiden Zugseile 10 und 11 mit solchen Seilführungen bspw. unterschiedliche Führungsabstände senkrecht zu dem Spannträger 1 vorgegeben werden, dann wird damit eine Differenzierung der an dem Tragflügel vorherrschenden Auftriebsbedingungen erhalten, die sich für das Auffinden einer optimalen Flügelform auf der Basis von experimentellen Untersuchungen ohne weiteres umsetzen lässt.

Bei der Ausführungsform der Fig. 2 ist eine übereinstimmende Anordnung eines biegeelastischen Spannträgers 1' und eines ebenso übereinstimmenden Seilzug-Stellantriebes 9' mit den beiden Zugseilen 10' und 11' realisiert. Unterschiedlich zu der Ausführungsform der Fig. 1 ist das Fehlen der biegeelastischen Stege oder Holme 7,8 und deren Ersatz durch eine dauerelastische vorzugsweise großporige Ausschäumung 13 der Flügelschale, um damit eine vergleichbare Abstützung des Spannträgers an der Beplankung des Trägerprofils 6' zu erhalten. Die Abstützfunktion der Ausschäumung 13 kann noch ergänzt werden durch zusätzlich vorgesehene Stege oder Holme unter Berücksichtigung der primär beabsichtigten Veränderungsmöglichkeit der Flügelform durch eine Veränderung der Bogenkrümmung des Spannträgers 1', die auch hier wieder durch eine angepasste Anordnung von Seilführungen 12' beeinflusst wird.

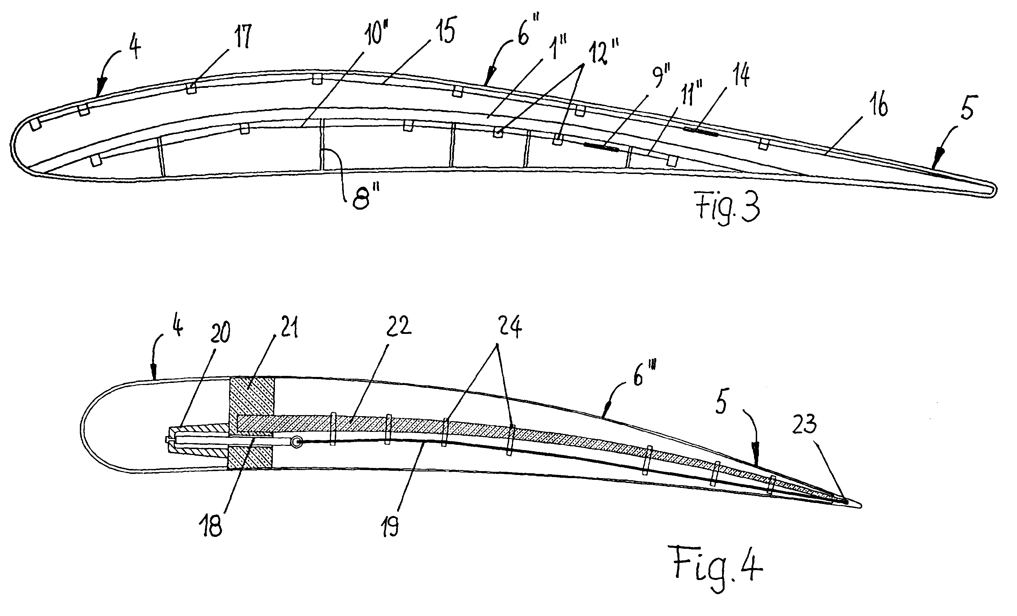

Bei der Ausführungsform der Fig. 3 ist eine Abstützung des Spannträgers 1'' über Stege oder Holme 8'' gegenüber der Druckseite der Beplankung vorgesehen. Andererseits ist an der Saugseite der Beplankung ein separater Seilzug-Stellantrieb 14 angeordnet, der ebenfaslls zwei einholbare Zugseile 15 und 16 aufweist, deren erste Enden hier unmittelbar an der Beplankung befestigt sind. Die Zugseile 15 und 16 werden ebenfalls durch Seilführungen 17 geführt, deren Verteilung und Ausbildung strategisch derart vorbestimmt wird, daß auch hier durch eine sich wechselseitig beeinflussende Wirkung der beiden Seilzug-Stellantriebe 9'' und 14 eine adaptive Veränderungsmöglichkeit des Trägerprofils 6'' für das Auffinden optimaler Auftriebsbedingungen erreichbar ist.

Bei der Ausführungsform der Fig. 4 ist ein Seilzug-Stellantrieb 18 der abweichenden Ausbildung mit nur einem einholbaren Zugseil 19 vorgesehen. Anstelle eines zweiten Zugseiles wie bei den vorbeschriebenen Ausführungsformen ist der Stellantrieb 18 mit einem Widerlager 20 versehen, welches nahe der Flügelnase an einem separaten Tragholm 21 angeordnet ist. Durch diesen Tragholm 21, an welchem also auch die Beplankung des Tragflügels befestigt ist, wird weiterhin das eine Ende eines hier ebenfalls biegeelastisch ausgeführten Spannträgers 22 verankert, dessen anderes Ende durch eine am Flügelende angeordnete Endleiste 23 gemeinsam mit dem freien Ende des Zugseiles 19 verankert ist. Zu diesem Ende hin wird das Zugseil 19 durch Seilführungen 24 geführt, die längs des Spannträgers 22 auf Abstand zueinander angeordnet und zum Teil unterschiedlich derart ausgebildet sind, daß für das Zugseil 19 verschieden große Führungsabstände senkrecht zu dem Spannträger 22 erhalten werden. Der Seilzug-Stellantrieb 18 ist im übrigen funktionell gleichwertig mit dem für die Ausführungsform der Fig. 1 beschriebenen Stellantrieb, wobei für eine weitere alternative Ausführungsform auch daran gedacht werden kann, daß auch hier ein zweites Zugseil für eine Verbindung des Stellantriebes mit dem Widerlager vorgesehen werden könnte.

Die erfindungsgemäße Einrichtung ist außer für den Tragflügel (Schalenflügel) eines Luftfahrzeuges auch anwendbar auf andere vergleichbare Strömungsprofile, so bspw. auch für Schiffspropeller bzw. generell für die Beschaufelung von Strömungsmaschinen. Als Tragflügel werden auch bspw. die Rotoren von Hubschraubern verstanden, bei denen ein vergleichbares Profil realisiert ist. Anstelle eines Seilzug-Stellantriebes der erfindungsgemäß bevorzugten Ausführungsform nach der EP 0 838 597 A1 können auch andere Stellantriebe vorgesehen werden, sofern dafür eine abweichende Zweckmäßigkeit erkannt werden sollte. Dabei versteht sich gleichzeitig, daß die Flügelgröße natürlich bestimmend ist für die Anzahl und auch für die Anrordnung und gegebenenfalls unterschiedliche Ausbildung der vorgesehenen Einrichtungen, die gemäß der Erfindung jeweils mit wenigstens einem biegeelastischen Spannträger und einem zugeordneten Seilzug-Stellantrieb ausgebildet sind, um damit wenigstens einen Teilbereich der Flügelform durch eine Veränderung der Bogenkrümmung des Spannträgers adaptiv verändern zu können. Der Spannträger kann auch mit integrierten Verzweigungen ausgebildet sein, die eine unmittelbare Abstützung der Beplankung ergeben und die Flügelform auch direkt verändern, wenn deren indirekte Veränderung mit einer Veränderung der Bogenkrümmung des Spannträgers eingestellt wird.

## Patentansprüche

1. Einrichtung bei einem Tragflügel (Schalenflügel) eines Luftfahrzeuges zur Veränderung der Flügelform respektive des Blattprofils bzw. der intern versteiften Beplankung des Tragflügels, gekennzeichnet durch
- wenigstens einen biegeelastischen Spannträger, der gegenüber der Beplankung des Tragflügels abgestützt und für die Einnahme eines bogenförmig gekrümmten, vorgespannten Trägerverlaufs mit den beiden Trägerenden an der Flügelnase und an dem Flügelende verankert ist, und
- wenigstens einen Seilzug-Stellantrieb, der für eine durch den Spannträger vermittelte Veränderung wenigstens einens Teilbereichs der Flügelform respektive des Blattprofils bzw. der Beplankung des Trägerflügels zwischen den flügelfesten Verankerungen des Spannträgers wirksam ist.

2. Einrichtung nach Anspruch 1, bei welcher der Seilzug-Stellantrieb mit wenigstens einem einholbaren Zugseil gebildet ist, das mit einer flügelfesten Verankerung des Spannträgers verbunden ist und ein flügelfestes Widerlager aufweist.

3. Einrichtung nach Anspruch 1, bei welcher der Seilzug-Stellantrieb mit zwei einholbaren Zugseilen gebildet ist, die jeweils mit einem ersten Ende an den beiden flügelfesten Verankerungen des Spannträgers und mit einem zweiten Ende an zwei Zugankern befestigt sind, welche mit den beiden axialen Enden einer im wesentlichen rohrförmigen Expansionskammer verbunden sind, die aus einem elastisch-nachgiebigen Material besteht und von einer aus einem flexiblen, jedoch nicht streckbaren und mit einem Endlosfaden gebildeten Fadenmaterial bestehenden und an den beiden Zugankern befestigten Kraftübertragungshülle umgeben ist, welche bei einer Beaufschlagung der Expansionskammer mit einem durch ein Arbeitsfluid vermittelten Innendruck über die beiden Zuganker axial entgegenwirkende Zugkräfte auf die beiden Zugseile ausübt.

4. Einrichtung nach den Ansprüchen 2 und 3, bei welcher eines der beiden Zugseile des Seilzug-Stellantriebes über die zugeordnete flügelfeste Verankerung des Spannträgers mit dem Widerlager des Stellantriebes verbunden ist.

5. Einrichtung nach einem der Ansprüche 1 bis 4, bei welcher das eine Ende des Spannträgers an einem Tragholm der Flügelnase verankert ist, wobei der Tragholm auch das Widerlager für den Seilzug-Stellantrieb aufweist, dessen Zugseil gemeinsam mit dem zweiten Ende des Spannträgers an einer Endleiste des Flügelendes verankert ist.

6. Einrichtung nach einem der Ansprüche 1 bis 5, daß das oder jedes Zugseil durch Seilführungen geführt ist, die längs des Spannträgers voneinander beabstandet sind und gegebenenfalls unterschiedliche und verstellbar ausgebildete Führungsabstände senkrecht zu dem Spannträger aufweisen.

7. Einrichtung nach einem der Ansprüche 1 bis 6, bei welcher der Spannträger durch biegeelastische und insbesondere nach dem Fischgrätenprinzip angeordnete Stege bzw. Holme an der Beplankung abgestützt ist.

8. Einrichtung nach einem der Ansprüche 1 bis 7, bei welcher der Spannträger durch eine dauerelastische und vorzugsweise großporige Ausschäumung der Flügelschale an der Beplankung abgestützt ist.

9. Einrichtung nach einem der Ansprüche 1 bis 8, bei welcher ein separater Seilzug-Stellantrieb direkt an der Saugseite der Beplankung angeordnet und mit zwei einholbaren Zugseilen ausgebildet ist, die voneinander beabstandete Befestigungen an der Beplankung aufweisen und durch auf Abstand zueinander angeordnete Seilführungen geführt sind.

10. Einrichtung nach einem der Ansprüche 1 bis 9, bei welcher für eine Veränderung der Flügelform in Abhängigkeit von dem Flugzustand der oder jeder Seilzug-Stellantrieb durch einen von Parametern für den Flugbetrieb bestimmten Regelkreis steuerbar ist.
